# EUROPEAN PATENT SPECIFICATION

(11) **EP 3 812 193 B1**
(45) Date of publication and mention of the grant of the patent: **06.09.2023**
(21) Application number: 19822844.7
(22) Date of filing: 07.06.2019
(51) Int. Cl.: G01P 3/50, G01S 19/52, B60L 3/00, G01C 21/28, B61L 25/02, G01P 7/00, G01S 5/00

(54) **MEASUREMENT APPARATUS**
MESSVORRICHTUNG
APPAREIL DE MESURE

(30) Priority: 21.06.2018 JP 2018117557
(43) Date of publication of application: 28.04.2021
(73) Proprietor: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: SETO, Naoto, Tokyo 105-0023 (JP); KOBAYASHI, Hiroyuki, Tokyo 105-0023 (JP); YAMASAKI, Yoshiaki, Tokyo 105-0023 (JP); TAKAHASHI, Yusuke, Tokyo 105-0023 (JP); HORIE, Masahiro, Tokyo 105-0023 (JP); FUTAGAMI, Takuya, Tokyo 105-0023 (JP); KAMO, Yushi, Kawasaki-shi, Kanagawa 212-0013 (JP); HATTORI, Yohei, Kawasaki-shi, Kanagawa 212-0013 (JP)
(74) Representative: Hoffmann Eitle
(86) International application number: PCT/JP2019/022818
(87) International publication number: WO 2019/244683

(56) References cited:
- JP-A- 2010 163 118
- JP-A- 2010 163 118
- JP-A- 2013 099 234
- JP-A- 2013 099 234
- JP-A- 2018 016 098
- JP-A- 2018 016 098
- US-A1- 2013 261 856
- US-A1- 2019 185 033

## Description

### FIELD

Embodiments described herein relate generally to a measurement apparatus.

### BACKGROUND

A measurement apparatus that calculates the speed of a railway vehicle is known. The measurement apparatus calculates a speed based on a speed pulse signal from a tachometer generator installed in a railway vehicle, the radius of a wheel, and the like, for example.

JP 2018 016098 A relates to a railway vehicle position measurement system that acquires position information and a satellite positioning speed obtained from a receiver of a satellite positioning radio wave reception system. The railway vehicle position measurement system acquires a Doppler speed being a speed of a railway vehicle obtained from a Doppler sensor for performing detection by using a Doppler phenomenon of electromagnetic waves, and acquires a calibrated speed obtained by calibrating the Doppler speed on the basis of the satellite positioning speed. The railway vehicle position measurement system uses at least one of the satellite positioning speed and the calibrated speed to specify an accurate position of a track.

JP 2010 163118 A relates to one or more reference stations arranged on the ground for receiving a satellite signal from a satellite, selecting a predetermined number of satellite combinations from the received satellite signals, and calculating the position of the reference station from the selected satellite signal.

US 2019/185033 A1 relates to a train position detection apparatus configured to detect a position of a train by receiving positioning radio waves from satellites through a reception antenna. The train position detection apparatus includes a memory that stores therein in advance a railway design standard of a railway track on which the train travels, and one or more hardware processors that detect a position of the train by self-contained navigation based on an input signal from a self-contained navigation sensor. When a result of the train position detection based on the positioning radio waves does not satisfy the railway design standard, the one or more hardware processors correct the result of the train position detection based on the positioning radio waves with a result of the position detection by self-contained navigation.

US 2013/261856 A1 relates to a system for confirming a direction of travel of a vehicle including a location determining system and a control unit. The location determining system is configured to be coupled to a vehicle that travels in a network of plural route segments having fixed positions. The location determining system also is configured to obtain data representative of a measured heading of the vehicle. The measured heading represents a direction of travel of the vehicle. The control unit is configured to receive a designated route segment that is at least one of selected by operator input or provided by a trip plan that designates operational settings of the vehicle for a trip. The control unit is configured to compare the measured heading of the vehicle with one or more designated headings associated with the route segments to verify whether the vehicle is actually traveling on the designated route segment.

JP 2013 099234 A relates to an onboard apparatus including a route database that stores start and end distances of an area with difficulty of radio wave reception, from a start point and stores a section length of the area; and an onboard control device.

However, errors occur between the speed pulse signal and the actual speed due to the influence of idling and sliding of wheels of the railway vehicle, and thus the accuracy of the speed is not sufficient that is calculated by the measurement apparatus on the basis of the speed pulse signal from the tachometer generator.

### BRIEF DESCRIPTION OF DRAWINGS

FIG. 1 is a plane view of a railway vehicle in which a control system of a first embodiment is installed.
FIG. 2 is a block diagram of an entire configuration of the control system of the first embodiment.
FIG. 3 is a block diagram illustrating functions of a measurement apparatus.
FIG. 4 is a diagram illustrating positions of satellites of a global navigation satellite system (GNSS).
FIG. 5 is a diagram illustrating selection of the satellites of the GNSS in position calculation.
FIG. 6 is a diagram illustrating selection of the satellites of the GNSS in speed calculation.
FIG. 7 is a sequence diagram illustrating position calculation processing executed by the measurement apparatus.
FIG. 8 is a sequence diagram illustrating speed calculation processing executed by the measurement apparatus.
FIG. 9 is a diagram illustrating a method for employing employed speed data of a second embodiment.
FIG. 10 is a diagram of determination processing executed by a determination processing unit of the second embodiment.
FIG. 11 is an entire configuration diagram of the control system of a third embodiment.
FIG. 12 is a diagram of the determination processing executed by the determination processing unit of the third embodiment.

### DETAILED DESCRIPTION

The object of the invention is achieved by the subject-matter of the independent claim. Advantageous embodiments are defined in the dependent claims. Further examples are provided for facilitating the understanding of the invention. Any reference to "embodiment(s)", "example(s)" or "aspect(s)" of "the invention" in this description not falling under the scope of the claims should be interpreted as illustrative example(s) for understanding the invention.

In general, a measurement apparatus according to an embodiment includes a first speed calculation module, a second speed calculation module, and a determination module. The first speed calculation module is configured to calculate a first speed of a railway vehicle, based on satellite radio waves from a satellite in a global navigation satellite system. The second speed calculation module is configured to calculate a second speed of the railway vehicle from a detection value of a sensor installed in the railway vehicle. The determination module is configured to determine which of the first speed and the second speed is employed based on a preset condition.

The following exemplary embodiments and modifications include similar components. Consequently, in the following, the similar components are denoted by common symbols, and a duplicate description is partially omitted. Parts included in the embodiments and modifications can be replaced with corresponding parts of other embodiments and modifications. The configuration, position, and the like of the parts included in the embodiments and modifications are similar to those of the other embodiments and modifications unless otherwise referred to.

### First Embodiment

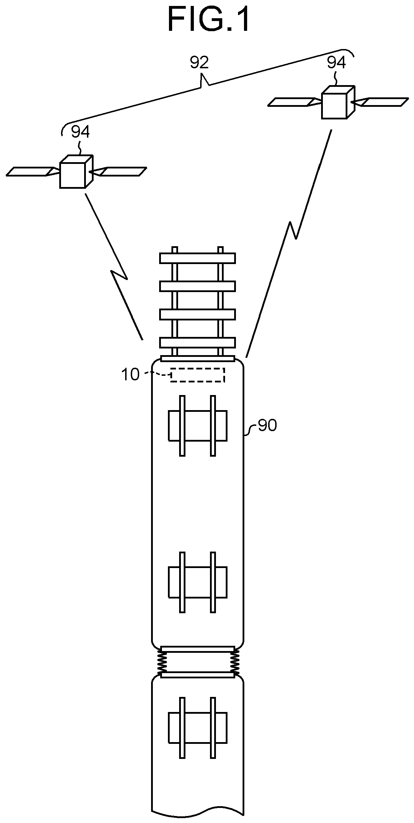

FIG. 1 is a plane view of a railway vehicle 90 in which a control system 10 of a first embodiment is installed.

As illustrated in FIG. 1, the control system 10 installed in the railway vehicle 90 receives satellite radio waves from satellites 94 of a global navigation satellite system (GNSS) 92. The control system 10 calculates the speed and the position of the railway vehicle 90 with the received satellite radio waves to control the railway vehicle 90.

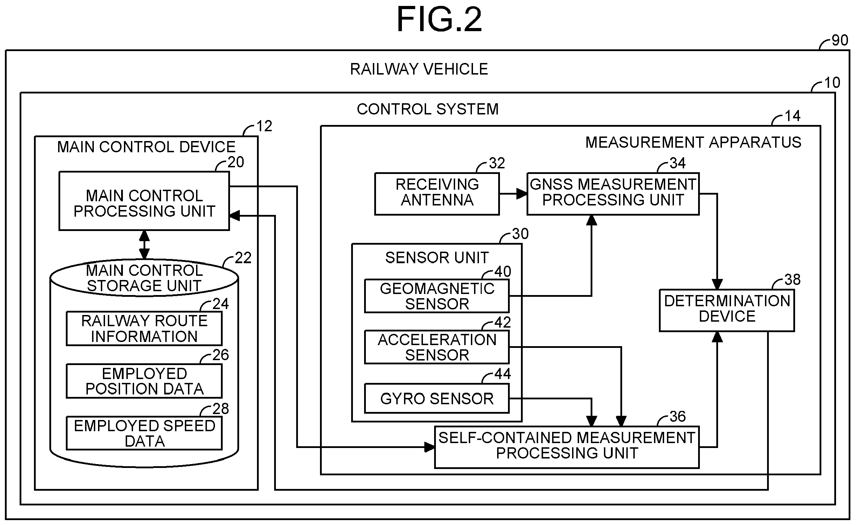

FIG. 2 is a block diagram of an entire configuration of the control system 10 of the first embodiment. The control system 10 is installed in the railway vehicle 90 to perform the entire control of the railway vehicle 90. As illustrated in FIG. 2, the control system 10 includes a main control device 12 and a measurement apparatus 14.

The main control device 12 controls the railway vehicle 90, based on railway route information 24 indicating the condition of a route on which the railway vehicle 90 travels, employed position data 26 indicating the position of the railway vehicle 90, employed speed data 28 indicating the speed of the railway vehicle 90, and the like. The main control device 12 is a computer, for example. The main control device 12 has a main control processing unit 20 and a main control storage unit 22.

The main control processing unit 20 may be a hardware processor such as a central processing unit (CPU), a graphics processing unit (GPU), or a micro processing unit (MPU). Part or the whole of the main control processing unit 20 may be formed by a circuit such as an application specific integrated circuit (ASIC) or a field-programmable gate array (FPGA). The main control processing unit 20 acquires the employed position data 26 and the employed speed data 28 from the measurement apparatus 14 and stores them in the main control storage unit 22. The main control processing unit 20 acquires information on a current position of the railway vehicle 90 indicated by the employed position data 26 from the railway route information 24 of the main control storage unit 22 and transmits it to the measurement apparatus 14. The main control processing unit 20 may extract gradient data indicating the gradient of a route of the current position of the railway vehicle 90, angle data indicating the curvature of the route, and the like from the railway route information 24 and transmit them to the measurement apparatus 14, for example.

The main control storage unit 22 includes storage apparatuses such as a read only memory (ROM), a random access memory (RAM), a solid state drive (SSD), and a hard disk drive (HDD). The main control storage unit 22 is connected to the main control processing unit 20 in such a manner that information can be input and output. The main control storage unit 22 may be an external storage apparatus connected via a network or the like. The main control storage unit 22 stores therein information required for the main control processing unit 20 to control the railway vehicle 90. The main control storage unit 22 stores therein the railway route information 24, the employed position data 26, and the employed speed data 28, for example. The railway route information 24 is information associating data indicating the condition of the route such as the gradient data and the angle data of the route on which the railway vehicle 90 travels with positions on the route.

The measurement apparatus 14 calculates a GNSS position and a GNSS speed indicating the position and the speed, respectively, of the railway vehicle 90 from the satellite radio waves received from the satellites 94 of the GNSS 92. The measurement apparatus 14 calculates a self-contained position and a self-contained speed indicating the position and the speed, respectively, of the railway vehicle 90 from data detected by sensors described below. The measurement apparatus 14 employs either position of the GNSS position or the self-contained position as an employed position and transmits the employed position data 26 indicating the employed position to the main control device 12. The measurement apparatus 14 employs either speed of the GNSS speed or the self-contained speed as an employed speed and transmits the employed speed data 28 indicating the employed speed to the main control device 12.

The measurement apparatus 14 includes a sensor unit 30, a receiving antenna 32, a GNSS measurement processing unit 34, a self-contained measurement processing unit 36, and a determination device 38.

The sensor unit 30 has one or more sensors. The sensor unit 30 has a geomagnetic sensor 40, an acceleration sensor 42, and a gyro sensor 44, for example. The geomagnetic sensor 40 detects an azimuth of the railway vehicle 90 and outputs azimuth data to the GNSS measurement processing unit 34. The acceleration sensor 42 detects an acceleration of the railway vehicle 90 and outputs acceleration data to the self-contained measurement processing unit 36. The gyro sensor 44 detects an angular velocity of the railway vehicle 90 and outputs angular velocity data to the self-contained measurement processing unit 36.

The receiving antenna 32 receives the satellite radio waves from the satellites 94 of the GNSS 92. The receiving antenna 32 outputs the satellite radio waves to the GNSS measurement processing unit 34.

The GNSS measurement processing unit 34 may be a hardware processor such as a CPU, a GPU, or an MPU. Part or the whole of the GNSS measurement processing unit 34 may be formed by a circuit such as an ASIC or an FPGA. The GNSS measurement processing unit 34 acquires the azimuth data from the geomagnetic sensor 40 and acquires the satellite radio waves from the receiving antenna 32. The GNSS measurement processing unit 34 calculates the GNSS position and the GNSS speed, based on the azimuth data and the satellite radio waves and outputs them to the determination device 38.

The self-contained measurement processing unit 36 may be a hardware processor such as a CPU, a GPU, or an MPU. Part or the whole of the self-contained measurement processing unit 36 may be formed by a circuit such as an ASIC or an FPGA. The self-contained measurement processing unit 36 acquires the acceleration data from the acceleration sensor 42 and acquires the angular velocity data from the gyro sensor 44. The self-contained measurement processing unit 36 acquires the angle data and the gradient data indicating the condition of the route from the main control device 12. The self-contained measurement processing unit 36 calculates the self-contained position and the self-contained speed in a self-contained manner, based on the acceleration data, the angular velocity data, the self-contained position and the self-contained speed calculated in the past, the angle data, and the gradient data and outputs them to the determination device 38.

The determination device 38 employs either the GNSS position or the self-contained position as the employed position. The determination device 38 employs either the GNSS speed or the self-contained speed as the employed speed. The determination device 38 transmits the employed position data 26 and the employed speed data 28 to the main control device 12.

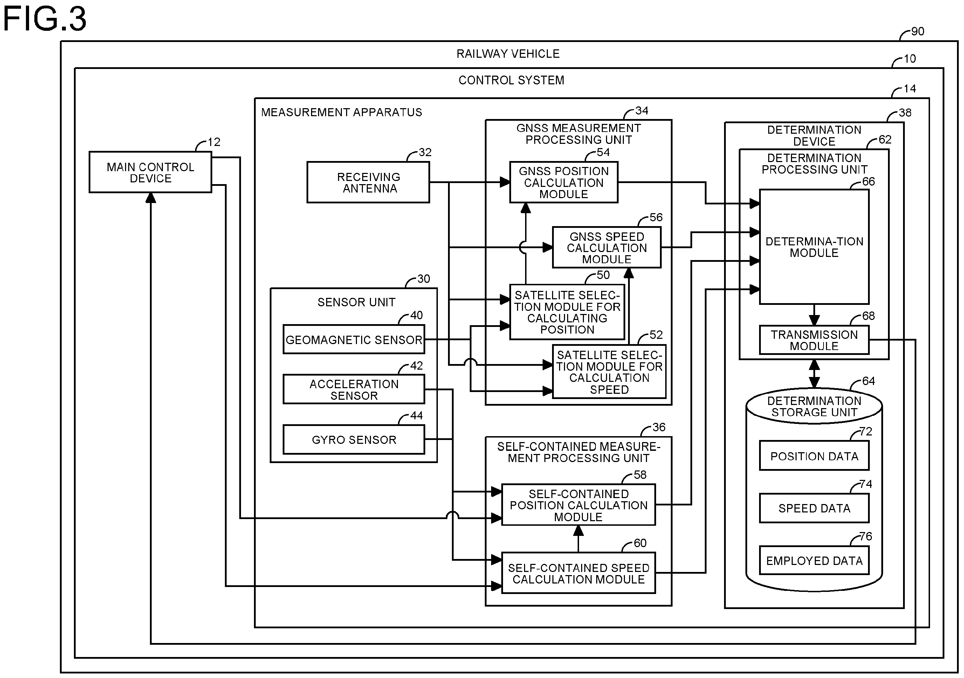

FIG. 3 is a block diagram illustrating functions of the measurement apparatus 14.

As illustrated in FIG. 3, the GNSS measurement processing unit 34 has a satellite selection module 50 for calculating position, a satellite selection module 52 for calculation speed, a GNSS position calculation module 54, and a GNSS speed calculation module 56. The GNSS measurement processing unit 34 may read a computer program for GNSS measurement to implement functions of the satellite selection module 50, the satellite selection module 52, the GNSS position calculation module 54, and the GNSS speed calculation module 56, for example. Part or the whole of the functions of the satellite selection module 50, the satellite selection module 52, the GNSS position calculation module 54, and the GNSS speed calculation module 56 may be implemented by a circuit such as an ASIC or an FPGA.

The satellite selection module 50 selects the satellites 94 for calculating the GNSS position. The satellite selection module 50 acquires the satellite radio waves from the receiving antenna 32 and acquires the azimuth data from the geomagnetic sensor 40, for example. The satellite selection module 50 defines a selection range for position for selecting the satellites 94. The satellite selection module 50 may set the selection range for position, based on an azimuth of a travel direction of the railway vehicle 90 indicated by the azimuth data and a set range for position, for example. The set range for position is a range for inhibiting reception of satellite radio waves such as multipath and may be set in advance as an azimuth angle with a front-and-rear direction of the travel direction of the railway vehicle 90 as a center line and with the railway vehicle 90 as a standard point. Consequently, the satellite selection module 50 defines two front-and-rear fan-shaped ranges with the front-and-rear direction of the travel direction of the railway vehicle 90 as a center line and with the azimuth angle indicated by the set range for position as a central angle as the selection range for position. The set range for position may include an elevation angle. In this case, the satellite selection module 50 defines an elliptical cone-shaped range with the railway vehicle 90 as the apex as the selection range for position. The satellite selection module 50 selects the satellites 94 within the selection range for position as the satellites 94 for calculating the GNSS position, based on the positions of the satellites 94 indicated by the satellite radio waves and outputs information on the selected satellites 94 to the GNSS position calculation module 54. The satellite selection module 50 may select the satellites 94 with the intensity of the received satellite radio waves being a threshold intensity or higher among the satellites 94 within the selection range for position.

The satellite selection module 52 selects the satellites 94 for calculating the GNSS speed. The satellite selection module 52 is an exemplary satellite selection module. The satellite selection module 52 acquires the satellite radio waves from the receiving antenna 32 and acquires the azimuth data from the geomagnetic sensor 40, for example. The satellite selection module 52 defines a selection range for speed for selecting the satellites 94. The satellite selection module 52 may set a range including the travel direction of the railway vehicle 90 as the selection range for speed, based on the azimuth of the travel direction of the railway vehicle 90 indicated by the azimuth data and a set range for speed, for example. The set range for speed is a range for inhibiting reception of satellite radio waves such as multipath and may be set in advance as an azimuth angle with the travel direction of the railway vehicle 90 as a center line and with the railway vehicle 90 as a standard point. Consequently, the satellite selection module 52 defines a fan-shaped range with the travel direction of the railway vehicle 90 as a center line and with the azimuth angle indicated by the set range for speed as a central angle as the selection range for speed. The set range for speed may include an elevation angle. In this case, the satellite selection module 52 defines an elliptical cone-shaped range with the railway vehicle 90 as the apex as the selection range for speed. The satellite selection module 52 selects the satellites 94 within the selection range for speed as the satellites 94 for calculating the GNSS speed, based on the positions of the satellites 94 indicated by the satellite radio waves and outputs information on the selected satellites 94 to the GNSS speed calculation module 56. The satellite selection module 52 may select the satellites 94 with the intensity of the received satellite radio waves being a threshold intensity or higher among the satellites 94 within the selection range for speed.

The GNSS position calculation module 54 calculates the GNSS position of the railway vehicle 90, based on the satellite radio waves from the satellites 94 of the GNSS 92. The GNSS position calculation module 54 acquires the satellite radio waves from the receiving antenna 32 and acquires the information on the satellites 94 selected in order to calculate the position from the satellite selection module 50, for example. The GNSS position calculation module 54 calculates the position of the railway vehicle 90 as the GNSS position, based on the satellite radio waves of the satellites 94 selected by the satellite selection module 50 among the acquired satellite radio waves. The GNSS position calculation module 54 outputs GNSS position data indicating the calculated GNSS position together with a time of reception of the satellite radio waves (hereinafter, a reception time) to the determination device 38. The GNSS position calculation module 54 outputs a valid flag of a satellite for position as a selection result of the satellites 94 together with the GNSS position data to the determination device 38. The GNSS position calculation module 54 outputs the valid flag of the satellite for position indicating that the selection result is valid when the number of the selected satellites 94 is four or more, in which the position thereof can be calculated, for example. The GNSS position calculation module 54 outputs the valid flag of the satellite for position indicating that the selection result is invalid when the number of the selected satellites 94 is less than three, in which the position thereof can be calculated.

The GNSS speed calculation module 56 calculates the GNSS speed of the railway vehicle 90, based on the satellite radio waves from the satellites 94 of the GNSS 92. The GNSS speed calculation module 56 is an exemplary first speed calculation module. The GNSS speed is an exemplary first speed. The GNSS speed calculation module 56 acquires the satellite radio waves from the receiving antenna 32 and acquires the information on the satellites 94 selected in order to calculate the speed from the satellite selection module 52, for example. The GNSS speed calculation module 56 calculates the speed of the railway vehicle 90 as the GNSS speed, based on the satellite radio waves of the satellites 94 selected by the satellite selection module 52 among the acquired satellite radio waves. The GNSS speed calculation module 56 may calculate the GNSS speed, based on the Doppler effect of the satellite radio waves, for example. When the satellite selection module 52 selects the satellites 94, the GNSS speed calculation module 56 may calculate an average of the speeds calculated from the respective satellites 94 as the GNSS speed. The GNSS speed calculation module 56 outputs GNSS speed data indicating the calculated GNSS speed together with a time of reception of the satellite radio waves (hereinafter, a reception time) to the determination device 38. The GNSS speed calculation module 56 outputs a valid flag of a satellite for speed as a selection result of the satellites 94 together with the GNSS speed data to the determination device 38. The GNSS speed calculation module 56 outputs the valid flag of the satellite for speed indicating that the selection result is valid when the number of the selected satellites 94 is one or more, in which the speed can be calculated, for example. The GNSS speed calculation module 56 outputs the valid flag of the satellite for speed indicating that the selection result is invalid when no satellites 94 have been selected.

The self-contained measurement processing unit 36 has a self-contained position calculation module 58 and a self-contained speed calculation module 60. The self-contained measurement processing unit 36 may read a computer program for self-contained measurement to implement functions of the self-contained position calculation module 58 and the self-contained speed calculation module 60, for example. Part or the whole of the functions of the self-contained position calculation module 58 and the self-contained speed calculation module 60 may be implemented by a circuit such as an ASIC or an FPGA.

The self-contained position calculation module 58 calculates the self-contained position of the railway vehicle 90 from detection values or the like of the sensors 42 and 44 provided in the railway vehicle 90. The self-contained position calculation module 58 acquires the acceleration data from the acceleration sensor 42 and acquires the angular velocity data from the gyro sensor 44, for example. The self-contained position calculation module 58 acquires self-contained speed data from the self-contained speed calculation module 60. The self-contained position calculation module 58 calculates a current position of the railway vehicle 90 as the self-contained position from the acceleration indicated by the acceleration data, the angular velocity indicated by the angular velocity data, the self-contained speed indicated by the self-contained speed data, and the self-contained position calculated last time. In an initial state such as at the start-up of the control system 10, the self-contained position calculation module 58 may calculate the self-contained position with the employed position data 26 stored at the last time end of the control system 10 as a standard. The self-contained position calculation module 58 may acquire the employed position data 26 from the main control device 12 regularly or for each constant moved distance to calibrate the self-contained position. The self-contained position calculation module 58 may calibrate the self-contained position, based on position information acquired with a proximity sensor, or the like when the railway vehicle 90 passes by apparatuses having position information installed near the route. The self-contained position calculation module 58 outputs self-contained position data indicating the calculated self-contained position to the determination device 38.

The self-contained speed calculation module 60 calculates the self-contained speed of the railway vehicle 90 from the detection values or the like of the sensors 42 and 44 installed in the railway vehicle 90. The self-contained speed calculation module 60 is an exemplary second speed calculation module. The self-contained speed is an exemplary second speed. The self-contained speed calculation module 60 acquires the acceleration data from the acceleration sensor 42 and acquires the angular velocity data from the gyro sensor 44, for example. The self-contained speed calculation module 60 acquires the railway route information 24 including the angle data and the gradient data from the main control device 12. The self-contained speed calculation module 60 calculates the speed of the railway vehicle 90 as the self-contained speed from an integral value of the acceleration indicated by the acceleration data, the angular velocity indicated by the angular velocity data, the curvature of the route indicated by the angle data, and the gradient of the route indicated by the gradient data. The self-contained speed calculation module 60 outputs the self-contained speed data indicating the calculate self-contained speed to the determination device 38.

The determination device 38 includes a determination processing unit 62 and a determination storage unit 64.

The determination processing unit 62 may be a hardware processor such as a CPU, a GPU, or an MPU. The determination processing unit 62 may be formed by a circuit such as an ASIC or an FPGA. The determination processing unit 62 has a determination module 66 and a transmission module 68. The determination processing unit 62 may implement functions of the determination module 66 and the transmission module 68. Part or the whole of the functions of the determination module 66 and the transmission module 68 may be implemented by a circuit such as an ASIC or an FPGA.

The determination module 66 determines which of the GNSS position and the self-contained position is employed as the employed position, based on a preset condition, and determines which of the GNSS speed and the self-contained speed is employed as the employed speed, based on a preset condition. Specifically, the determination module 66 acquires the GNSS position data, the GNSS speed data, the self-contained position data, and the self-contained speed data from the GNSS position calculation module 54, the GNSS speed calculation module 56, the self-contained position calculation module 58, and the self-contained speed calculation module 60, respectively. The determination module 66 stores the acquired GNSS position data and self-contained position data as position data 72 in the determination storage unit 64 and stores the GNSS speed data and the self-contained speed data as speed data 74 in the determination storage unit 64.

The determination module 66 determines which of the acquired GNSS position data and self-contained position data is employed as the employed position data 26, based on the valid flag of the satellite for position, as a selection result of the satellite selection module 50. Specifically, the determination module 66 determines that the GNSS position data is employed as the employed position data 26 when the valid flag of the satellite for position is valid and the self-contained position data is employed as the employed position data 26 when the valid flag of the satellite for position is invalid. The determination module 66 determines which of the GNSS speed data and the self-contained speed data is employed as the employed speed data 28, based on the valid flag of the satellite for speed, as a selection result of the satellite selection module 52. Specifically, the determination module 66 employs the GNSS speed data as the employed speed data 28 when the valid flag of the satellite for speed is valid and employs the self-contained speed data as the employed speed data 28 when the valid flag of the satellite for speed is invalid. The determination module 66 stores, in the determination storage unit 64, the employed position data 26 and the employed speed data 28 employed in association with a calculated time or a received time as employed data 76 and outputs them to the transmission module 68.

The transmission module 68 transmits the employed position data 26 and the employed speed data 28 acquired from the determination module 66 to the main control device 12. The transmission module 68 may acquire the employed position data 26 and the employed speed data 28 from the determination storage unit 64.

The determination storage unit 64 includes storage apparatuses such as a ROM, a RAM, an SSD, and an HDD. The determination storage unit 64 is connected to the determination processing unit 62 in such a manner that information can be input and output. The determination storage unit 64 may be an external storage apparatus connected via a network or the like. The determination storage unit 64 stores therein the position data 72, the speed data 74, and the employed data 76 acquired from the determination module 66.

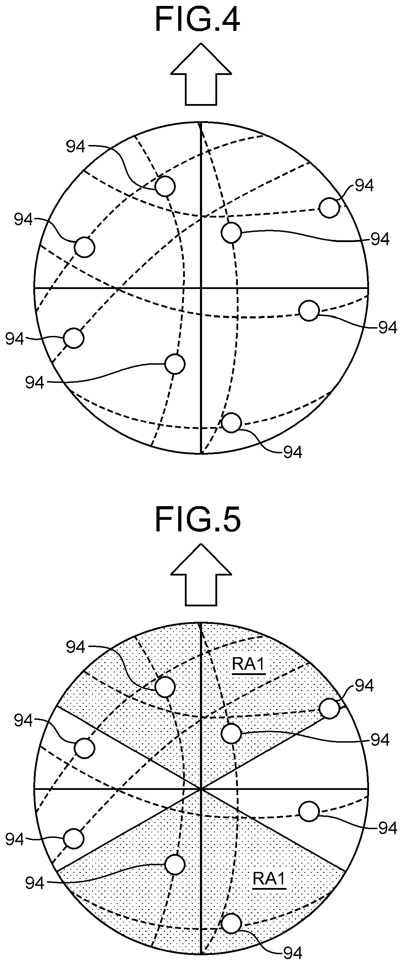

FIG. 4 is a diagram illustrating the positions of the satellites 94 of the GNSS 92. The center of FIG. 4 is the position of the railway vehicle 90, whereas the white arrow is the travel direction of the railway vehicle 90. The broken lines in FIG. 4 indicate orbits of the satellites 94. As illustrated in FIG. 4, the satellites 94 are present omnidirectionally, that is, across 360 degrees relative to the railway vehicle 90. Consequently, the measurement apparatus 14 receives the satellite radio waves from all directions.

FIG. 5 is a diagram illustrating selection of the satellites 94 of the GNSS 92 in position calculation. As illustrated in FIG. 5, the satellite-for-position selection module 50 of the measurement apparatus 14 defines a set range for position (60 degrees on both right and left sides, for example) set on both right and left sides with respect to the center of the front, which is the travel direction of the railway vehicle 90 and a set range for position (60 degrees on both right and left sides, for example) set on both right and left sides with respect to the center of the rear, as a selection range RA1 for position (refer to the dot hatched area). The satellite selection module 50 selects the satellites 94 within the selection range RA1 for position and outputs them to the GNSS position calculation module 54. The GNSS position calculation module 54 defines the valid flag of the satellite for position to be valid when the number of the selected satellites 94 is four or more, in which the position thereof can be calculated.

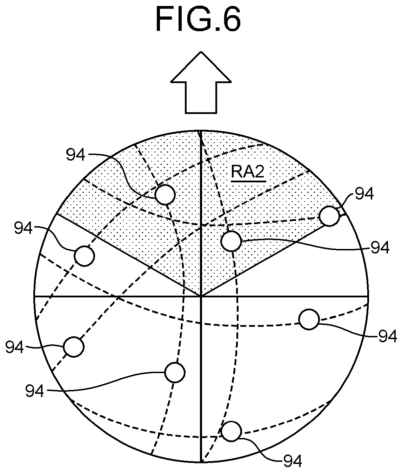

FIG. 6 is a diagram illustrating selection of the satellites 94 of the GNSS 92 in speed calculation. As illustrated in FIG. 6, the satellite selection module 52 of the measurement apparatus 14 defines a set range for speed set on both right and left sides with the front, which is the travel direction of the railway vehicle 90, as the center (60 degrees on both right and left sides, for example), as a selection area RA2 for speed (refer to the dot hatched area). The satellite selection module 52 selects the satellites 94 within the selection area RA2 for speed and outputs them to the GNSS speed calculation module 56. The GNSS speed calculation module 56 defines the valid flag of the satellites for speed to be valid when the selected satellites 94 are present.

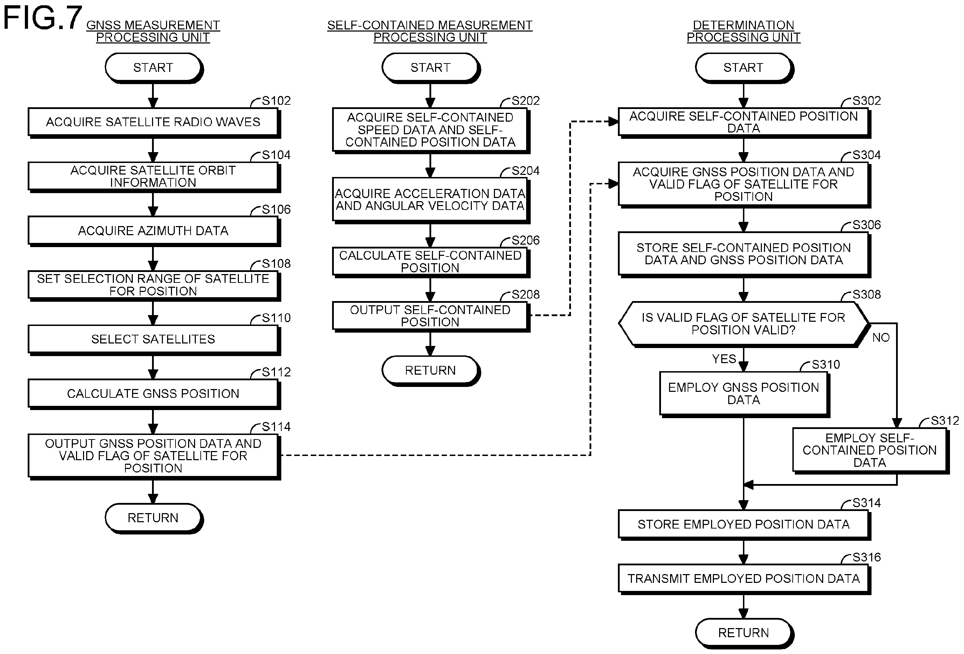

FIG. 7 is a sequence diagram illustrating position calculation processing executed by the measurement apparatus 14. The flowchart on the left side of FIG. 7 is GNSS position calculation processing executed by the GNSS measurement processing unit 34. The flowchart in the middle of FIG. 7 is self-contained position calculation processing executed by the self-contained measurement processing unit 36. The flowchart on the right side of FIG. 7 is determination processing executed by the determination processing unit 62.

As illustrated on the left side of FIG. 7, in the GNSS measurement processing unit 34, the satellite selection module 50 and the GNSS position calculation module 54 acquire the satellite radio waves from the receiving antenna 32 (S102). The satellite selection module 50 and the GNSS position calculation module 54 acquire satellite orbit information including almanac and ephemeris from the satellite radio waves (S104). The satellite selection module 50 acquires the azimuth data from the geomagnetic sensor 40 (S106). The satellite selection module 50 defines the selection range RA1 for position with the front-and-rear direction along the travel direction of the railway vehicle 90 indicated by the azimuth data as the center, based on the set range for position (S108). The satellite selection module 50 selects the satellite 94 within the selection range RA1 for position and outputs them to the GNSS position calculation module 54 (S110). The GNSS position calculation module 54 calculates the GNSS position as the position of the railway vehicle 90, based on the satellite orbit information acquired from the satellite radio waves of the satellites 94 selected by the satellite-for-position selection module 50 (S112). The GNSS position calculation module 54 outputs the calculated GNSS position and the valid flag of the satellite for position to the determination processing unit 62 (S114). The GNSS position calculation module 54 may make the valid flag of the satellite for position valid when the number of the satellites 94 selected by the satellite selection module 50 is four or more, and the GNSS position can be calculated and make the valid flag of the satellite for position invalid when the number of the satellites 94 is three or less. Subsequently, the GNSS measurement processing unit 34 repeats Step S102 and the subsequent steps.

As illustrated in the middle of FIG. 7, in the self-contained measurement processing unit 36, the self-contained position calculation module 58 acquires the self-contained speed data from the self-contained speed calculation module 60 and acquires the self-contained position data calculated last time (S202). The self-contained position calculation module 58 acquires the acceleration data from the acceleration sensor 42 and acquires the angular velocity data from the gyro sensor 44 (S204). The self-contained position calculation module 58 calculates a this-time self-contained position, based on the self-contained speed indicated by the self-contained speed data, the acceleration data, and the angular velocity data from the self-contained position calculated last time (S206). The self-contained position calculation module 58 outputs the self-contained position to the determination processing unit 62 (S208). Subsequently, the self-contained measurement processing unit 36 repeats Step S202 and the subsequent steps.

As illustrated on the right side of FIG. 7, in the determination processing unit 62, the determination module 66 acquires the self-contained position from the self-contained measurement processing unit 36 (S302). The determination module 66 acquires the GNSS position and the valid flag of the satellite for position from the GNSS measurement processing unit 34 (S304). The determination module 66 stores the self-contained position and the GNSS position as the position data 72 in the determination storage unit 64 (S306). The determination module 66 determines whether the valid flag of the satellite for position is valid (S308). If the determination module 66 determines that the valid flag of the satellite for position is valid (Yes at S308), the determination module 66 employs the GNSS position data as the employed position data 26 (S310). If the determination module 66 determines that the valid flag of the satellite for position is not valid (No at S308), the determination module 66 employs the self-contained position data as the employed position data 26 (S312). The determination module 66 stores the employed position data 26 that has been employed as the employed data 76 in the determination storage unit 64 (S314). The transmission module 68 acquires the employed position data 26 from the determination module 66 or the determination storage unit 64 and transmits it to the main control device 12 (S316). Subsequently, the determination processing unit 62 repeats Step S302 and the subsequent steps.

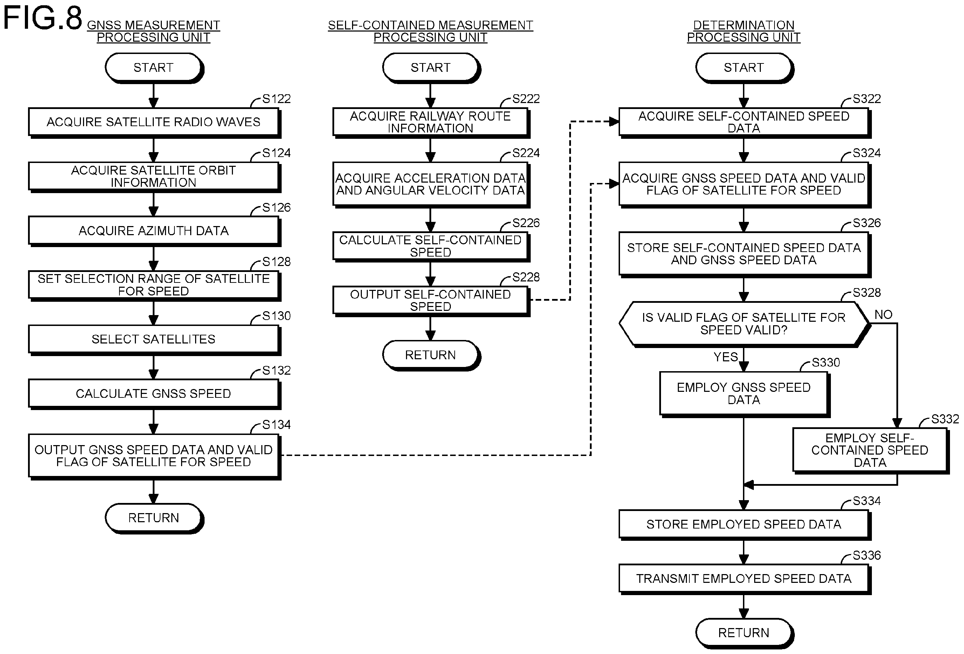

FIG. 8 is a sequence diagram illustrating speed calculation processing executed by the measurement apparatus 14. The flowchart on the left side of FIG. 8 is GNSS speed calculation processing executed by the GNSS measurement processing unit 34. The flowchart in the middle of FIG. 8 is self-contained speed calculation processing executed by the self-contained measurement processing unit 36. The flowchart on the right side of FIG. 8 is determination processing executed by the determination processing unit 62.

As illustrated on the left side of FIG. 8, in the GNSS measurement processing unit 34, the satellite selection module 52 and the GNSS speed calculation module 56 acquire the satellite radio waves from the receiving antenna 32 (S122). The satellite selection module 52 and the GNSS speed calculation module 56 acquire satellite orbit information including almanac and ephemeris from the satellite radio waves (S124). The satellite selection module 52 acquires the azimuth data from the geomagnetic sensor 40 (S126). The satellite selection module 52 defines the selection range RA2 for speed with the travel direction of the railway vehicle 90 indicated by the azimuth data as the center, based on the set range for speed (S128). The satellite selection module 52 selects the satellite 94 within the selection range RA2 for speed and outputs them to the GNSS speed calculation module 56 (S130). The GNSS speed calculation module 56 calculates the GNSS speed as the speed of the railway vehicle 90, based on the satellite orbit information acquired from the satellite radio waves of the satellites 94 selected by the satellite selection module 52 (S132). The GNSS speed calculation module 56 outputs the calculated GNSS speed and the valid flag of the satellite for speed to the determination processing unit 62 (S134). The GNSS speed calculation module 56 may make the valid flag of the satellite for speed valid when the number of the satellites 94 selected by the satellite selection module 52 is one or more, and the GNSS speed can be calculated and make the valid flag of the satellite for speed invalid when there are no satellites 94. Subsequently, the GNSS measurement processing unit 34 repeats Step S122 and the subsequent steps.

As illustrated in the middle of FIG. 8, in the self-contained measurement processing unit 36, the self-contained speed calculation module 60 acquires the railway route information 24 including the angle data and the gradient data of the route on which the railway vehicle 90 travels from the main control device 12 (S222). The self-contained speed calculation module 60 acquires the acceleration data from the acceleration sensor 42 and acquires the angular velocity data from the gyro sensor 44 (S224). The self-contained speed calculation module 60 calculates the self-contained speed, based on the gradient data, the angle data, the acceleration data, and the angular velocity data (S226). The self-contained speed calculation module 60 outputs the self-contained speed to the determination processing unit 62 and the self-contained position calculation module 58 (S228). Subsequently, the self-contained measurement processing unit 36 repeats Step S222 and the subsequent steps.

As illustrated on the right side of FIG. 8, in the determination processing unit 62, the determination module 66 acquires the self-contained speed from the self-contained measurement processing unit 36 (S322). The determination module 66 acquires the GNSS speed and the valid flag of the satellite for speed from the GNSS measurement processing unit 34 (S324). The determination module 66 stores the self-contained speed and the GNSS speed as the speed data 74 in the determination storage unit 64 (S326). The determination module 66 determines whether the valid flag of the satellite for speed is valid (S328). If the determination module 66 determines that the valid flag of the satellite for speed is valid (Yes at S328), the determination module 66 employs the GNSS speed data as the employed speed data 28 (S330). If the determination module 66 determines that the valid flag of the satellite for speed is not valid (No at S328), the determination module 66 employs the self-contained speed data as the employed speed data 28 (S332). The determination module 66 stores the employed speed data 28 that has been employed as the employed data 76 in the determination storage unit 64 (S334). The transmission module 68 acquires the employed speed data 28 from the determination module 66 or the determination storage unit 64 and transmits it to the main control device 12 (S336). Subsequently, the determination processing unit 62 repeats Step S322 and the subsequent steps.

As described above, the measurement apparatus 14 of the first embodiment employs the employed speed as the speed of the railway vehicle 90 used in the control of the railway vehicle 90 by the main control device 12 from either the GNSS speed calculated on the basis of the satellite radio waves of the GNSS 92 or the self-contained speed calculated from the detection values of the sensors 42 and 44. Thus, the measurement apparatus 14 can employ an employed speed with high accuracy from the speeds calculated by the two different methods and can thus improve the calculation accuracy of the speed of the railway vehicle 90.

The measurement apparatus 14 employs the employed speed from either the GNSS speed or the self-contained speed, based on the valid flag of the satellite for speed indicating the selection result of the satellites 94 for calculating the GNSS speed by the satellite selection module 52. Thus, the measurement apparatus 14 can employ the GNSS speed as the employed speed when calculation accuracy by the satellites 94 is high.

The measurement apparatus 14 selects the satellites 94 for calculating the GNSS speed, based on the selection range RA2 for speed including the travel direction of the railway vehicle 90. Thus, the measurement apparatus 14 can improve the calculation accuracy of the GNSS speed, and can employ the GNSS speed with high accuracy as the employed speed, based on the selection result of the satellites 94.

### Second Embodiment

The following describes a second embodiment, which differs in the method for employing the employed speed data 28 to be employed by the determination processing unit 62. In the second embodiment, the GNSS position calculation module 54 is an exemplary first position calculation module.

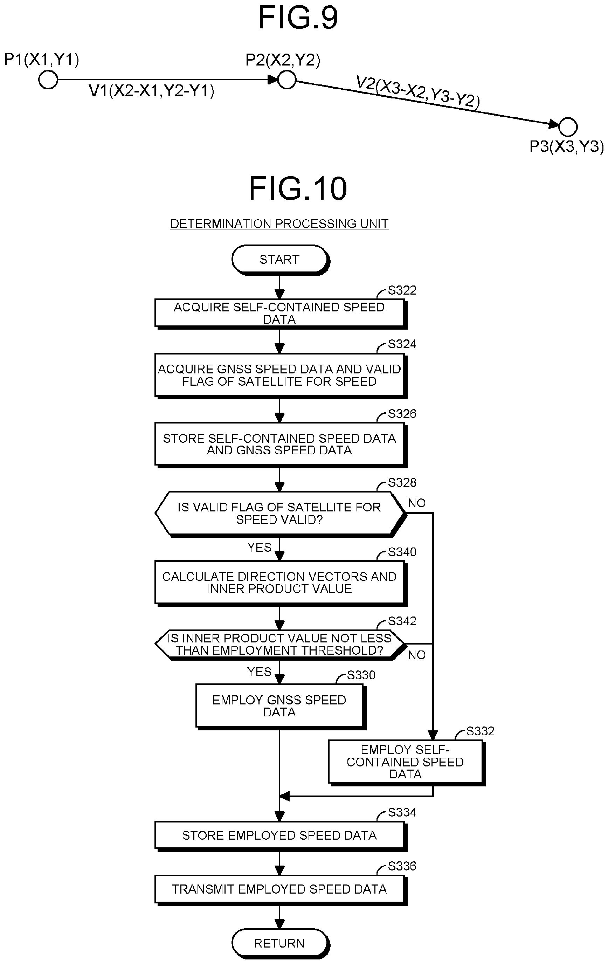

FIG. 9 is a diagram illustrating the method for employing the employed speed data 28 of the second embodiment. The positions P1, P2, and P3 in FIG. 9 indicate positions of the railway vehicle 90 at different times. The positions P1, P2, and P3 may be positions indicated by the GNSS position data. The position P3 indicates the current or latest position calculated from the satellite radio waves. The position P2 indicates a position calculated from the satellite radio waves before the position P3. The position P1 indicates a position calculated from the satellite radio waves before the position P2. Xn and Yn within the parentheses of the position Pn (n = 1,2,3) indicate coordinates of the position Pn.

The determination module 66 determines which of the GNSS speed and the self-contained speed is employed as the employed speed, based on direction vectors V1 and V2 that connect the position P1 and the position P2 with each other and connect the position P2 and the position P3 with each other, respectively. The determination module 66 acquires position coordinates of the positions P1, P2, and P3 from the position data 72 stored in the determination storage unit 64, for example. The position coordinates may be coordinates transformed from longitude data and latitude data into a Cartesian coordinate system. The determination module 66 calculates the direction vector V1 from the position P1 to the position P2 and calculates the direction vector V2 from the position P2 to the position P3. The determination module 66 calculates an inner product value IP of the direction vectors V1 and V2 (= (X2 - X1)·(X3 - X2) + (Y2 - Y1)-(Y3 - Y2)). The determination module 66 determines whether the GNSS speed data is employed as the employed speed data 28 by comparison between the inner product value IP and an employment threshold. The employment threshold is a value based on which whether an angle between the direction vectors V1 and V2 corresponds to the curvature of the route indicated by the angle data is determined. The employment threshold may be set in advance in association with a position on the route of the railway vehicle 90 or may be calculated from the curvature of the route indicated by the angle data. The determination module 66 may employ the GNSS speed data as the employed speed data 28 if the valid flag of the satellite for speed is valid and the inner product value IP is not less than the employment threshold, for example. The determination module 66 may employ the self-contained speed data as the employed speed data 28 if the valid flag of the satellite for speed is invalid or the inner product value IP is less than the employment threshold.

FIG. 10 is determination processing executed by the determination processing unit 62 of the second embodiment. Steps similar to those of FIG. 8 are denoted by the same step numbers, and descriptions thereof are omitted. The GNSS speed/self-contained speed calculation processing is similar to that of FIG. 8 and is thus omitted.

As illustrated in FIG. 10, the determination module 66 executes Step S322 to Step S328. If the valid flag of the satellite for speed is valid (Yes at S328), the determination module 66 calculates the two direction vectors V1 and V2 from the position coordinates of the positions P1, P2, and P3 and then calculates the inner product value IP of the two direction vectors V1 and V2 (S340). The determination module 66 determines whether the calculated inner product value IP is not less than the employment threshold (S342). If the inner product value IP is not less than the employment threshold (Yes at S342), the determination module 66 employs the GNSS speed data as the employed speed data 28 (S330).

0054 In contrast, if the valid flag of the satellite for speed is not valid (No at S328), or if the inner product value IP is less than the employment threshold (No at S342), the determination module 66 employs the self-contained speed data as the employed speed data 28.

0055 Subsequently, the determination module 66 and the transmission module 68 execute Step S334 and the subsequent step.

0056 As described above, the measurement apparatus 14 of the second embodiment employs the employed speed from the GNSS speed and the self-contained speed, based on the direction vectors connecting the positions of the railway vehicle 90 at different times calculated from the satellite radio waves with each other. Thus, the measurement apparatus 14 determines whether the direction vectors correspond to the curvature of the route on which the railway vehicle 90 travels and can thus determine whether the satellite radio waves are normal. Consequently, the measurement apparatus 14 can employ the GNSS speed with high accuracy as the employed speed when the satellite radio waves are normal.

### 0057 Third Embodiment

The following describes a third embodiment, which has a different method for employing the employed speed data 28 to be employed by the determination processing unit 62. In the third embodiment, the GNSS position calculation module 54 is an exemplary second position calculation module. The self-contained position calculation module 58 may function as the second position calculation module.

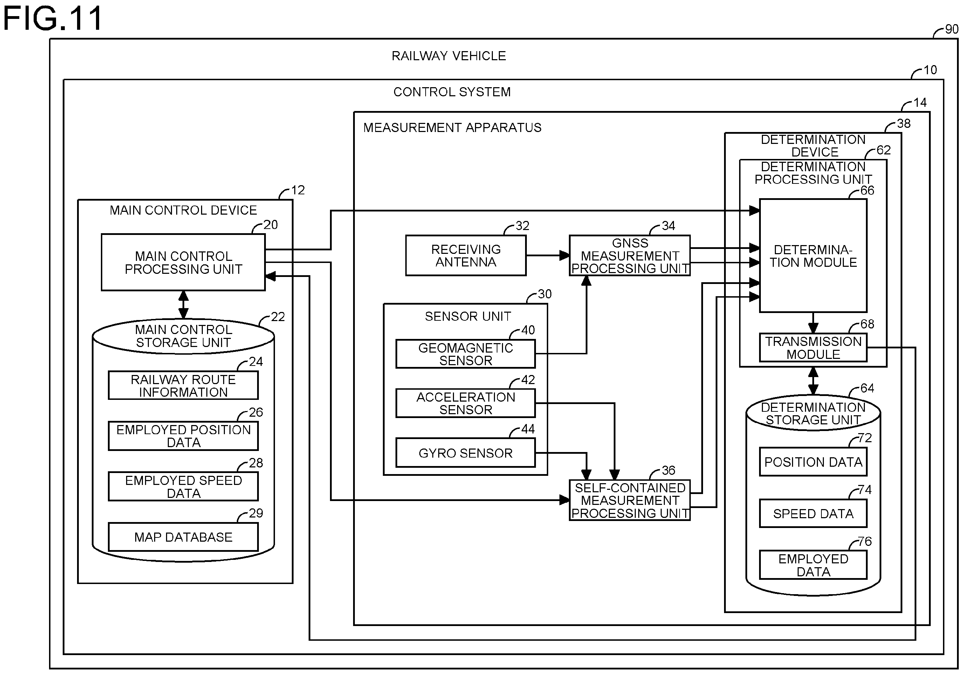

0058 FIG. 11 is an entire configuration diagram of the control system 10 of the third embodiment. As illustrated in FIG. 11, the main control storage unit 22 of the main control device 12 of the third embodiment further stores therein map database 29. The map database 29 includes position information on positions of objects such as stations and tunnels on the route of the railway vehicle 90. In other words, the map database 29 includes information on the objects that are hard to receive the satellite radio waves. The main control device 12 outputs the position information of the objects included in the map database 29 to the determination device 38.

0059 The determination module 66 of the determination device 38 determines which of the GNSS speed and the self-contained speed is employed as the employed speed, based on the position of the railway vehicle 90 and the positions of the objects. The determination module 66 acquires the position information of the objects included in the map database 29, and determines whether the position of the railway vehicle 90 indicated by the employed position data 26 is a self-contained employment area, based on the position information, for example. The self-contained employment area is an area including the objects such as stations and tunnels and the vicinity of the objects and is an area hard to receive the satellite radio waves. When the position of the railway vehicle 90 is the self-contained employment area, the determination module 66 employs the self-contained speed data as the employed speed data 28. When the valid flag of the satellite for speed becomes valid after the position of the railway vehicle 90 has been the self-contained employment area, the determination module 66 employs the GNSS speed data as the employed speed data 28.

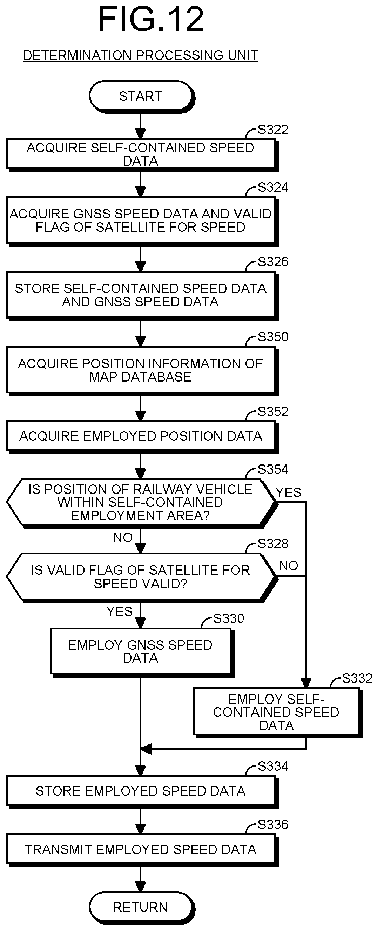

0060 FIG. 12 is determination processing executed by the determination processing unit 62 of the third embodiment. Steps similar to those of FIG. 8 are denoted by the same step numbers, and descriptions thereof are omitted. The GNSS speed/self-contained speed calculation processing is similar to that of FIG. 8 and is thus omitted.

0061 The determination module 66 of the determination processing unit 62 executes Step S322 to Step S326. The determination module 66 acquires the position information of the objects such as stations and tunnels included in the map database 29 from the main control device 12 (S350).
The determination module 66 acquires the latest employed position data 26 from the employed data 76 stored in the determination storage unit 64 (S352). The determination module 66 determines whether the position of the railway vehicle 90 indicated by the employed position data 26 is within the self-contained employment area (S354). If the determination module 66 determines that the position of the railway vehicle 90 is within the self-contained employment area (Yes at S354), the determination module 66 employs the self-contained speed data as the employed speed data 28 (S332). If the determination module 66 determines that the position of the railway vehicle 90 is not within the self-contained employment area (No at S354), the determination module 66 determines whether the valid flag of the satellite for speed is valid (S328). If the determination module 66 determines that the valid flag of the satellite for speed is valid (Yes at S328), the determination module 66 employs the GNSS speed data as the employed speed data 28 (S330). If the determination module 66 determines that the valid flag of the satellite for speed is not valid (No at S328), the determination module 66 employs the self-contained speed data as the employed speed data 28 (S332). Subsequently, the determination module 66 and the transmission module 68 execute S334 and the subsequent step.

0062 As described above, the measurement apparatus 14 of the third embodiment employs the employed speed from the GNSS speed and the self-contained speed, based on the position information of the objects such as stations and tunnels on the route of the railway vehicle 90. Thus, the measurement apparatus 14 can employ the GNSS speed as the employed speed in areas other than the vicinity of stations, tunnels, and the like, in which it is easy to receive the satellite radio waves and employ the self-contained speed as the employed speed near stations, tunnels, and the like that is hard to receive the satellite radio waves. Consequently, the measurement apparatus 14 can employ the speed with high accuracy as the employed speed.

0063 Some embodiments of the present invention have been described; these embodiments have been presented by way of example and do not intend limit the scope of the invention. These novel embodiments can be performed in various other modes; various omissions, replacements, and modifications can be made within the scope not departing from the gist of the invention. These embodiments and modifications thereof are included in the invention described in the claims as well as being included in the scope and gist of the invention.

0064 The computer programs described above may be stored and provided in a computer-readable storage medium such as a compact disc read only memory (CD-ROM) or a digital versatile disc read only memory (DVD-ROM) or may be provided via a network such as the Internet.

0065 In the embodiments described above, the self-contained speed calculation module 60 calculates the self-contained speed, based on the acceleration data detected by the acceleration sensor 42; however, the method for calculating the self-contained speed is not limited to this method. The self-contained speed calculation module 60 may calculate the self-contained speed, based on a speed pulse signal detected by a sensor provided in a tachometer generator of the railway vehicle 90, the radius of a wheel of the railway vehicle 90, and the like, for example.

0066 The embodiments described above may be combined with each other. With the first embodiment, the second embodiment, and the third embodiment combined with each other, the crew or the like of the railway vehicle 90 may select the determination processing by the determination processing unit 62, for example.

0067 The order of the steps of the flowcharts of the embodiments described above may be changed as appropriate.

### REFERENCE SIGNS LIST

0068
- 10: CONTROL SYSTEM
- 14: MEASUREMENT APPARATUS
- 26: EMPLOYED POSITION DATA
- 28: EMPLOYED SPEED DATA
- 29: MAP DATABAS E
- 38: DETERMINATION DEVICE
- 40: GEOMAGNETIC SENSOR
- 42: ACCELERATION SENSOR
- 44: GYRO SENSOR
- 50: SATELLITE S ELECTION MODULE
- 52: SATELLI TE S ELECTION MODULE
- 54: GNSS POSITION CALCULATION MODULE
- 56: GNSS SPEED CALCULATION MODULE ( FIRST SPEED CALCULATION MODULE)
- 58: SELF-CONTAINED POSITION CALCULATION MODULE
- 60: S ELF-CONTAINED SPEED CALCULATION MODULE (SECOND SPEED CALCULATION MODULE)
- 66: DETERMINATION MODULE
- 90: RAILWAY VEHICLE
- 92: GLOBAL NAVIGATION SATELLITE SYSTEM (GNSS)
- 94: SATELLITE

## Claims

1. A measurement apparatus (14) comprising:
a first speed calculation module (56) configured to calculate a first speed of a railway vehicle, based on satellite radio waves from a satellite in a global navigation satellite system;
a second speed calculation module (60) configured to calculate a second speed of the railway vehicle from a detection value of a sensor installed in the railway vehicle;
a first position calculation module configured to calculate first to third positions of the railway vehicle based on the satellite radio waves; and
a determination module (66) configured to:
calculate a first direction vector connecting the first and second positions and a second direction vector connecting the second and third positions;
calculate an inner product value of the first and second direction vectors; and
determine which of the first speed and the second speed is employed, based on comparison between the inner product value and an employment threshold, the employment threshold being a value for determining whether an angle between the first and second direction vectors corresponds to a curvature of a route indicated by angle data.

2. The measurement apparatus (14) according to claim 1, further comprising a satellite selection module (52) configured to select the satellite to be used for calculating the first speed, wherein
the determination module (66) is configured to determine which of the first speed and the second speed is employed, based on a selection result of the satellite selection module.

3. The measurement apparatus (14) according to claim 2, wherein the satellite selection module (52) is configured to select the satellite within a selection range for speed including a travel direction of the railway vehicle, as the satellite to be used for calculating the first speed.

4. The measurement apparatus (14) according to any one of claims 1 to 3, further comprising a second position calculation module (54, 58) configured to calculate a position of the railway vehicle, wherein
the determination module (66) is configured to acquire position information on a position of an object on a route on which the railway vehicle travels and determines which of the first speed and the second speed is employed based on the position of the railway vehicle and the position of the object.

## Patentansprüche

1. Messeinrichtung (14), umfassend:
ein erstes Geschwindigkeitsrechenmodul (56), das konfiguriert ist, eine erste Geschwindigkeit eines Eisenbahnfahrzeugs zu berechnen, basierend auf Satellitenfunkwellen aus einem Satelliten in einem globalen Navigationssatellitensystem;
ein zweites Geschwindigkeitsrechenmodul (60), das konfiguriert ist, eine zweite Geschwindigkeit des Eisenbahnfahrzeugs aus einem Detektionswert eines in dem Eisenbahnfahrzeug installierten Sensors zu berechnen;
ein erstes Positionsrechenmodul, das konfiguriert ist, erste bis dritte Positionen des Eisenbahnfahrzeugs auf Basis der Satellitenfunkwellen zu berechnen; und
ein Bestimmungsmodul (66), das konfiguriert ist:
einen ersten Richtungsvektor, der die ersten und zweiten Positionen verbindet, und einen zweiten Richtungsvektor, der die zweiten und dritten Positionen verbindet, zu berechnen;
einen inneren Produktwert der ersten und zweiten Richtungsvektoren zu berechnen; und
zu bestimmen, welche der ersten Geschwindigkeit und der zweiten Geschwindigkeit verwendet wird, basierend auf dem Vergleich zwischen dem inneren Produktwert und einem Verwendungsschwellenwert, wobei der Verwendungsschwellenwert ein Wert zum Bestimmen ist, ob ein Winkel zwischen den ersten und zweiten Richtungsvektoren einer Krümmung einer durch Winkeldaten angegebenen Route entspricht.

2. Messeinrichtung (14) gemäß Anspruch 1, weiter umfassend ein Satellitenauswahlmodul (52), dass konfiguriert ist, den zum Berechnen der ersten Geschwindigkeit zu verwendenden Satelliten auszuwählen, wobei
das Bestimmungsmodul (66) konfiguriert ist, zu bestimmen, welche der ersten Geschwindigkeit und der zweiten Geschwindigkeit verwendet wird, basierend auf einem Auswahlergebnis des Satellitenauswahlmoduls.

3. Messeinrichtung (14) gemäß Anspruch 2, wobei das Satellitenauswahlmodul (52) konfiguriert ist, den Satelliten innerhalb eines Auswahlbereichs für die Geschwindigkeit auszuwählen, die eine Bewegungsrichtung des Eisenbahnfahrzeugs enthält, als den zur Berechnung der Geschwindigkeit zu verwendenden Satelliten.

4. Messeinrichtung (14) gemäß einem der Ansprüche 1 bis 3, weiter umfassend ein zweites Positionsrechenmodul (54,58), das konfiguriert ist, eine Position des Eisenbahnfahrzeugs zu berechnen, wobei
das Bestimmungsmodul (66) konfiguriert ist, Positionsinformation über eine Position eines Objekts auf einer Route, auf welcher das Eisenbahnfahrzeug fährt, zu erfassen, und bestimmt, welche der ersten Geschwindigkeit und der zweiten Geschwindigkeit verwendet wird, basierend auf der Position des Eisenbahnfahrzeugs und der Position des Objekts.

## Revendications

1. Appareil (14) de mesure comprenant :
un premier module (56) de calcul de vitesse configuré pour calculer une première vitesse d'un véhicule ferroviaire, sur la base d'ondes radio de satellite provenant d'un satellite dans un système mondial de navigation par satellite ;
un second module (60) de calcul de vitesse configuré pour calculer une seconde vitesse du véhicule ferroviaire à partir d'une valeur de détection d'un capteur installé dans le véhicule ferroviaire ;
un premier module de calcul de position configuré pour calculer des première à troisième positions du véhicule ferroviaire sur la base des ondes radio de satellite ; et
un module (66) de détermination configuré pour :
calculer un premier vecteur de direction reliant les première et deuxième positions et un second vecteur de direction reliant les deuxième et troisième positions ;
calculer une valeur de produit scalaire des premier et second vecteurs de direction ; et
déterminer quelle vitesse parmi la première vitesse et la seconde vitesse est employée, sur la base d'une comparaison entre la valeur de produit scalaire et un seuil d'emploi, le seuil d'emploi étant une valeur pour déterminer si un angle entre les premier et second vecteurs de direction correspond à une courbure d'un itinéraire indiqué par des données d'angle.

2. Appareil (14) de mesure selon la revendication 1, comprenant en outre un module (52) de sélection de satellite configuré pour sélectionner le satellite devant être utilisé pour calculer la première vitesse, dans lequel
le module (66) de détermination est configuré pour déterminer quelle vitesse parmi la première vitesse et la seconde vitesse est employée, sur la base d'un résultat de sélection du module de sélection de satellite.

3. Appareil (14) de mesure selon la revendication 2, dans lequel le module (52) de sélection de satellite est configuré pour sélectionner le satellite au sein d'une plage de sélection pour une vitesse comportant une direction de déplacement du véhicule ferroviaire, comme étant le satellite devant être utilisé pour calculer la première vitesse.

4. Appareil (14) de mesure selon l'une quelconque des revendications 1 à 3, comprenant en outre un second module (54, 58) de calcul de position configuré pour calculer une position du véhicule ferroviaire, dans lequel
le module (66) de détermination est configuré pour acquérir des informations de position sur une position d'un objet sur un itinéraire sur lequel le véhicule ferroviaire se déplace et détermine quelle vitesse parmi la première vitesse et la seconde vitesse est employée sur la base de la position du véhicule ferroviaire et de la position de l'objet.
